# EUROPEAN PATENT SPECIFICATION

(11) **EP 2 863 675 B1**
(45) Date of publication and mention of the grant of the patent: **31.01.2018**
(21) Application number: 14177562.7
(22) Date of filing: 17.07.2014
(51) Int. Cl.: H04W 16/22, H04W 16/20, H04L 12/24, H04L 12/26, H04W 64/00, H04W 84/18, H04W 24/10, G06F 3/01

(54) **Wearable network coverage analyzer**
Tragbarer Netzabdeckungs-Analysator
Analyseur de zone de service de réseau portable

(30) Priority: 29.07.2013 US 201313953515
(43) Date of publication of application: 22.04.2015
(73) Proprietor: Honeywell International Inc., Morris Plains, NJ 07950 (US)
(72) Inventor: Mahasenan, Arun Vijayakumari, Morristown, NJ 07962-2245 (US); Huseth, Steve, Morristown, NJ 07962-2245 (US); Pulleti, Uday K., Morristown, NJ 07962-2245 (US)
(74) Representative: Houghton, Mark Phillip

(56) References cited:
- US-A1- 2002 111 772
- US-A1- 2002 129 138
- US-A1- 2003 224 806
- US-A1- 2006 019 679
- US-A1- 2013 162 673

## Description

### Technical Field

The present disclosure relates to a wearable network topology analyzer.

### Background

Nodes can be placed at various locations in a structure to distribute data and/or collect data. A node can include a sensor, a wireless router, and/or a camera, for example. During installation of nodes, a site survey team can design a network topology for the placement of the nodes. The design can be provided to a contractor, who can install the nodes according to the design. In an example, it can be difficult to install the nodes according to the design. Even if the nodes are installed according to the design, the network of nodes may not function as anticipated due to an error in the designed network topology and/or an error in placement of the nodes.

As such, when the network of nodes does not function as anticipated, distribution and/or collection of data by the network of nodes can be affected. For instance, an incorrectly placed wireless router can result in an area not receiving a wireless signal and/or an area receiving a degraded wireless signal. Alternatively, and/or in addition, data and/or images may not be collected from an area if a sensor and/or camera is placed in an incorrect area.

Patent document number US2002/111772A1 describes a system for creating a computer database model of either measured data network throughput properties or wireless communication signal properties within a facility by measuring the desired properties at a plurality of locations within the facility and embedding the measured properties at the location of measurement represented in a three-dimensional facility drawing database.

The present invention in its various aspects is as set out in the appended claims.

### Brief Description of the Drawings

Figure 1A illustrates a system for analyzing a network topology according to one or more embodiments of the present disclosure.
Figure 1B illustrates a view looking through a wearable network topology analyzer according to one or more embodiments of the present disclosure.
Figure 2 illustrates a method for analyzing a network topology according to one or more embodiments of the present disclosure.
Figure 3 illustrates a computing device for analyzing a network topology according to one or more embodiments of the present disclosure.

### Detailed Description

Systems, methods, and devices for analyzing a network topology are described herein. For example, one or more embodiments include receiving data from a node in a network of nodes with a wearable network topology analyzer, determining, with the wearable network topology analyzer, a coverage associated with the node in the network of nodes based on the received data, and determining whether to perform an operation to adjust the coverage associated with the node in the network of nodes, based on the determined coverage.

As discussed herein, nodes can be placed at various locations in a structure to distribute data and/or collect data. For example, a wireless router can be placed in the structure to distribute and/or collect data; a sensor (e.g., smoke detector) can be placed in the structure to collect data (e.g., data associated with a fire), and/or a camera can be placed in the structure to collect images for use in security monitoring. Placement of the nodes can be important for proper distribution and/or collection of data. In an example, an improper placement of a node can result in data not being distributed and/or collected for a portion of the structure.

For instance, if a first node is placed too far from a second node, data may not be collected and/or distributed at a point that is between the first node and the second node. Alternatively, and/or in addition, if a node is placed on a first side of a wall, instead of a second side of the wall, data may not be collected and/or distributed for areas that are located on a same side as the second side of the wall.

The nodes can be installed in particular positions according to a network topology designed by a site survey team. The network topology can include a defined layout of a network of nodes, for example. The defined layout of the network of nodes can be a design that specifies where each node should be installed so that data can be properly distributed and/or collected by each node. In an example, the defined layout of the network of nodes can be designed by a survey team. The design can then be used by a contractor, who can install the nodes according to the design. However, an error can be made by the contractor, which can result in a node that is placed in an incorrect position. As such, a performance of the incorrectly installed node may not match an anticipated performance of the designed network topology.

For instance, a position of a node may be specified on a map that is provided to the contractor. However, the contractor may make an error when translating a position specified on the map to an actual position where the node is installed. Alternatively, and/or in addition, the design can contain errors associated with a position where the node should be placed.

Some embodiments of the present disclosure can analyze a network topology to determine whether a node has been installed according to a designed network topology. In an example, data can be collected from the node installed at a site with a wearable network topology analyzer and a coverage associated with the node can be determined. In an example, the coverage associated with the node can be defined as an area that has a signal broadcast to every portion of the area by the node. Alternatively, and/or in addition, a connectivity associated with the node and nodes in a network of nodes, which can include one or more nodes, can be determined by the wearable network topology analyzer. The connectivity can include an ability of a node in the network of nodes to communicate with at least one other node in the network of nodes.

Some embodiments of the present disclosure can provide an augmented reality to a user of the wearable network topology analyzer. In an example, the wearable network topology analyzer can be worn by the user such that a display associated with the wearable network topology analyzer can be viewed by the user. For instance, the wearable network topology analyzer can be built into a pair of glasses and can display details associated with a node, such as a radiation pattern and/or a determined position to place a node. In an example, the wearable network topology analyzer can be implemented in Google Glass.

As such, when the user installs the node, the wearable network topology analyzer can continually display the position where the node should be installed in augmented reality. This can help to improve an accuracy associated with installing the node.

Some embodiments of the present disclosure can display a radiation pattern associated with the node and/or other details associated with the node to the user via augmented reality on the wearable network topology analyzer. For instance, the user can view the radiation pattern associated with the signal produced by the node to determine if there are any gaps in coverage provided by the signal. Alternatively, and/or in addition, details such as signal strength, data rate, etc. can be provided to the user audibly and/or via augmented reality on the wearable network topology analyzer.

In the following detailed description of the present disclosure, reference is made to the accompanying drawings that form a part hereof, and in which is shown by way of illustration how one or more embodiments of the disclosure may be practiced. These embodiments are described in sufficient detail to enable those of ordinary skill in the art to practice the embodiments of this disclosure, and it is to be understood that other embodiments may be utilized and that process, electrical, and/or structural changes may be made without departing from the scope of the present disclosure.

The figures herein follow a numbering convention in which the first digit or digits correspond to the drawing figure number and the remaining digits identify an element or component in the drawing. As will be appreciated, elements shown in the various embodiments herein can be added, exchanged, and/or eliminated so as to provide a number of additional embodiments of the present disclosure. As used herein, "a" or "a number of" refers to one or more. In addition, as will be appreciated, the proportion and the relative scale of the elements provided in the figures are intended to illustrate the embodiments of the present invention, and should not be taken in a limiting sense.

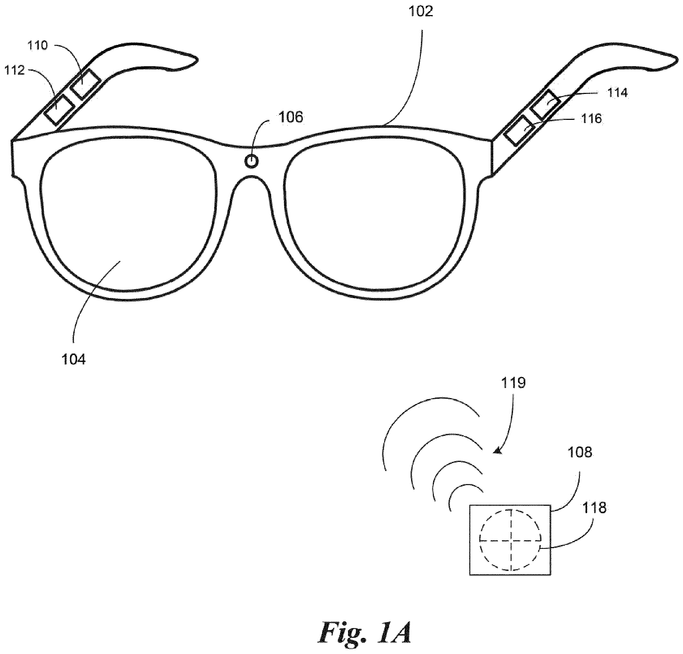

Figure 1A illustrates a system for analyzing a network topology according to one or more embodiments of the present disclosure. The system can include a wearable network topology analyzer 102. The wearable network topology analyzer 102 can include a display 104 to present an augmented reality to a user of the wearable network topology analyzer 102. In an example, the display can be a transparent lens that is attached to the wearable network topology analyzer 102. For example, the wearable network topology analyzer 102 can be a pair of glasses and the display 104 can be incorporated into a lens of the glasses by projecting information onto the lens and/or by incorporating a screen into the lens. In some embodiments, the wearable network topology analyzer 102 can be implemented in Google Glass.

In some embodiments, the wearable network topology analyzer can include a camera 106. In an example, the camera 106 can be used to capture images of a site where the user wishes to install a node 108 and/or collect data associated with a node 108 in the site. For instance, the camera 106 can be used to capture images of the site and a two-dimensional (2-D) and/or three-dimensional (3-D) map can be constructed from the captured images. The constructed map can include walls, doorways, columns, and/or other obstructions, for example.

In some embodiments, the wearable network topology analyzer 102 can include a wireless radio 110 and/or a cellular radio 112. In an example, the wireless radio 110 and/or the cellular radio 112 can be used to transmit and/or receive data to and/or from the node 108. Data can include a bandwidth associated with the node 108, a signal quality associated with the node 108, a data rate associated with the node 108, a signal/noise ratio associated with the node 108. For example, a signal strength associated with the node 108 can be determined based on data received from the node 108 by the wireless radio 110. Alternatively, and/or in addition, information can be received by the wireless radio 110 and/or cellular radio 112, such as a map associated with the site where the user wishes to install the node 108. For instance, a map that specifies a position where the node 108 is to be installed can be received by the wireless radio 110 and/or cellular radio 112.

Alternatively, and/or in addition, information can be transmitted by the wireless radio 110 and/or the cellular radio 112 to a remote server from the wearable network topology analyzer 102 for analysis. In an example, transmitting information to a remote server for processing can be beneficial because the remote server may provide more processing resources than those available on the wearable network topology analyzer 102. In some embodiments, all types of data processing performed on the wearable network topology analyzer 102 can be performed on the remote server.

In some embodiments, the wearable network topology analyzer 102 can include a global positioning system (GPS) antenna 114. The GPS antenna 114 can be used to determine a position (e.g., GPS location) of the wearable network topology analyzer 102. In an example, the position of the wearable network topology analyzer 102 can be used to create a map of the site where the user wishes to install the node 108.

In some embodiments, the wearable network topology analyzer 102 can include a microphone 116. In an example, the microphone 116 can be used to receive voice commands from the user of the wearable network topology analyzer 102.

In some embodiments, a position 118 to place a node 108 on a map associated with a network of nodes can be determined. Examples of the node can include a sensor, camera, and/or wireless router, although examples are not so limited. In an example, the map that specifies a position 118 where the node 108 is to be installed can be received by the wireless radio 110 and/or cellular radio 112. As such, the wearable network topology analyzer 102 can determine the position 118 to place the node 108 in the site from the received map.

Alternatively, and/or in addition, the user can specify the position where the node 108 is to be installed through the wearable network topology analyzer 102. For instance, the user can look at an area where a node should be placed in the site and the wearable network topology analyzer 102 can determine where the user is looking. In an example, the user can indicate that a node should be placed where the user is looking.

In some embodiments, an icon 118 can be placed on the display 104 of the wearable network topology analyzer 102. In an example, the user can line the icon 118 up with the position where the node 108 should be placed. When the icon 118 is lined up with the position where the node 108 should be placed, the camera 106 can be used to determine the position where the node 108 should be placed. For instance, a field of view of the camera can correspond to a position that is in line with the icon 118 placed on the display 104. As such, the position where the node should be placed can be stored by the wearable network topology analyzer 102.

Alternatively, and/or in addition, tilt sensors can be placed in the wearable network topology analyzer 102. As such, as the user tilts their head in a direction to line up the icon 118 placed on the display with the position where the node 108 should be placed, the wearable network topology analyzer can detect a position where the node 108 should be placed relative to a map of the site based on a tilt associated with the tilt sensors.

In an example, a directional sensor (e.g., compass) and location sensor (e.g., GPS antenna) included in the wearable network topology analyzer 102, as well as the map of the site can be accessed. The location sensor can detect where the user is on the map of the site, the directional sensor can detect what direction the user is looking, and the tilt sensor can detect a vertical position where the user is looking. As discussed herein, the position where the node should be placed can be stored by the wearable network topology analyzer 102.

In some embodiments, the determined position to place the node 108 can be displayed to the user via augmented reality on the wearable network topology analyzer 102. In an example, the determined position to place the node 108 can be displayed to the user via augmented reality as an icon 118 on the wearable network topology analyzer 102. In an example, as the wearable network topology analyzer 102 moves (e.g., the user moves their head), the icon 118 can also move on the display 104, such that the icon 118 continually tracks the location where the node 108 should be placed.

For instance, as shown in Figure 1A, when a user is looking at the location where the node 108 should be placed, the user would see the icon 118 presented on the display 104, such that the icon 118 appears to be projected over the position where the node 108 should be placed. In an example, the icon 118 can be a dot, a cross-hair, and/or a grid, although examples are not so limited.

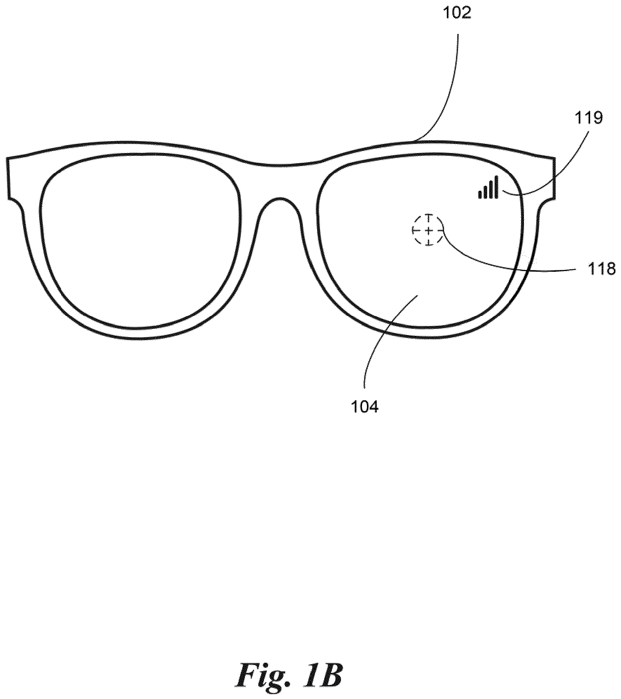

Figure 1B illustrates a view looking through a wearable network topology analyzer according to one or more embodiments of the present disclosure. In an example, the icon 118 can be presented on the display 104 of the wearable network topology analyzer 102. As the wearable network topology analyzer 102 moves, for example, when the user moves their head, the icon 118 can move on the display, such that the icon 118 is continually placed over the position where the node is to be installed. As such, an increased accuracy associated with where the node is installed can be achieved.

In some embodiments, the wearable network topology analyzer 102 can generate a prediction of connectivity and/or coverage associated with node 108 based on the determined position where the node 108 is to be installed. For instance, the position of each node 108 in a network of nodes can be stored by the wearable network topology analyzer 102 and a signal propagation from the network of nodes can be simulated by the wearable network topology analyzer 102.

In some embodiments, site environment data can be received by the wearable network topology analyzer 102. In an example, site environment data can include data associated with an environment in which the network of nodes is being installed. For instance, the site environment data can include whether the site environment is an indoor site or an outdoor site. Propagation properties associated with a signal 119 from the node 108 can be affected as a result of whether the environment is an indoor site or an outdoor site. For instance, temperature and/or humidity can vary between indoor and outdoor environments and as a result can affect signal propagation from the network of nodes.

Alternatively, and/or in addition, site environment data can include a geographical location of the site environment. In an example, the geographical location can provide an indication of temperature and humidity, which can affect signal propagation from the network of nodes, as discussed herein. In an example, the geographical location can be associated with a temperature propagation factor and/or a humidity propagation factor, which can be used in determining the effect on the signal propagation from the network of nodes.

In an example, the site environment data can include data associated with free spaces and/or occupied spaces in the site environment. For instance, where the site environment is an indoor site, spaces within the indoor site can be occupied by obstructions, such as, a support column and/or wall, etc. Alternatively, and/or in addition, if the site environment is an outdoor site, spaces within the outdoor site can be occupied by obstructions, such as, equipment (e.g., distillation column), landscaping features (e.g., trees), walls, columns, etc. As such, the signal propagation from the network of nodes can be affected as a result of the absence and/or presence of a free space and/or occupied space.

For example, signal propagation from the network of nodes may be reduced when the signal 119 is obstructed as a result of equipment and/or walls existing in the site environment. Comparatively, signal propagation may not be affected to the same extent in the presence of free spaces in the site environment because the propagation of the signal 119 may not be obstructed by equipment and/or walls, for example.

In some embodiments, where spaces in the site environment are occupied by an obstruction, such as, a column, wall, landscaping features, equipment, etc., an obstruction propagation factor can be associated with the obstruction. In an example, a reinforced steel and concrete wall may result in a greater obstruction of the signal propagation from the network of nodes than a glass wall. Accordingly, an obstruction propagation factor indicating a greater obstruction associated with the reinforced steel and concrete wall can be assigned to the wall and an obstruction propagation factor indicating a lesser obstruction associated with the glass wall can be assigned to the glass wall.

In an example, the network topology analyzer 102 can display a prediction of a pattern associated with a signal 119 produced by the node 108 in the network of nodes. For example, the network topology analyzer 102 can display the prediction of the pattern associated with the signal 119 produced by the node 108 in the network of nodes in augmented reality on the display 104. The prediction of the pattern associated with the signal 119 produced by the node 108 network of nodes can account for propagation factors associated with obstructions proximate to the network of nodes.

In an example, the pattern can be associated with the signal 119 produced by the node 108 in the network of nodes and can be presented as a cross-hatch pattern, among other types of patterns, on the display 104, for example. As the signal 119 produced by the node 108 weakens as a result of an increasing distance from the node 108 and/or obstructions that are present, the pattern can change to indicate that a strength of the signal 119 has been reduced. For instance, when the strength of the signal 119 has been reduced to a defined point, the pattern may not be displayed. Alternatively, and/or in addition, a contrast associated with the pattern can change. For instance, as the signal 119 weakens, the contrast associated with the pattern can be reduced on the display 104. As such, when the user looks through the wearable network topology analyzer 102, the user can be provided with a visual indication of signal strength 119, for example.

Although the visual indication of signal strength 119 is illustrated as a bar graph, the visual indication of the signal strength 119 can be a numerical representation and or other visual indication of signal strength (e.g., pie graph). In an example, a numerical representation of signal strength may be used to provide a finer granularity of distinction between signal strength than the bar graph. For instance, a signal strength on a scale of 1 to 100 can be displayed to the user numerically.

Based on the connectivity and/or coverage predicted by the wearable network topology analyzer 102, the wearable topology analyzer 102 can update the map that specifies the position 118 where the node 108 is to be installed. For instance, the map that specifies the position 118 where the node 108 is to be installed may not contain complete details associated with the site where the node 108 is to be installed and/or may contain incorrect details associated with the site where the node 108 is to be installed. As such, an update to the map that specifies the position 118 where the node 108 is to be installed can be made. Accordingly, the updated position of the node 108 can represented by the icon 118 on the display 104 of the wearable network topology analyzer 102.

In an example, the node 108 can be installed by the user in the determined position indicated by the icon 118. In some embodiments, after the node is installed by the user, the wearable network topology analyzer 102 can receive data from the node 108 placed in the determined position. In an example, the data received from the node 108 placed in the determined position includes data associated with a strength of the signal 119 produced by the node 108 placed in the determined position. As the user walks around the site, the data associated with the strength of the signal 119 can be received and used to present a visual representation of a pattern associated with a signal 119 produced by the node 108.

Alternatively, and/or in addition, data associated with a strength of interfering signals can be received and used to present the visual representation of the pattern associated with signals produced by nodes in the network of nodes. For instance, signals that overlap (e.g., interfere) with one another can produce a different signal strength than a single signal. In an example, the signal strength associated with interfering signals can cause in increase in signal strength.

In an example, the visual representation pattern can be associated with the signal 119 produced by the node 108 in the network of nodes and can be presented as a cross-hatch pattern, among other types of patterns, on the display 104 in augmented reality. In an example, the shape of the pattern can depend on a type of antenna used in the wireless radio 110. For instance, the wearable network topology analyzer can display a pattern associated with the signal 119 produced by the node 108 placed in the determined position.

As the signal 119 produced by the node 108 weakens as a result of an increasing distance from the node 108 and/or obstructions that are present, the pattern can change to indicate that a strength of the signal 119 has been reduced. For instance, when the strength of the signal 119 has been reduced to a defined point, the pattern may not be displayed. Alternatively, and/or in addition, a contrast associated with the pattern can change. For instance, as the signal 119 weakens, the contrast associated with the pattern can be reduced on the display 104. As such, when the user looks through the wearable network topology analyzer 102, the user can be provided with a visual indication of signal strength, for example.

In an example, the pattern associated with the signal 119 can account for obstructions that are within range of the signal 119 produced by the node 108 placed in the determined position. Since the data associated with the strength of the signal 119 is collected while the node is operational (e.g., generating a signal), the pattern associated with the signal 119 is an actual representation of signal strength and is not a prediction, which can be used for determining whether coverage is provided to each portion of the site.

In an example, the wireless nodes can be placed into site survey mode by the wearable network topology analyzer 102. For instance, each node 108 can broadcast its local neighbor lists. As such, the local neighbor can receive the broadcast and determine whether it is in range of the node 108 and/or determine statistics associated with the node 108. In some embodiments, the wearable network topology analyzer 102 can collect the neighbor lists and create an adjacency matrix. The adjacency matrix can be used to determine whether connectivity exists between each node 108 in the network of nodes, in an example. If connectivity does not exist between each node in the network of nodes, the wearable network topology analyzer 102 can determine whether to move a node in the network of nodes and/or determine whether to place an additional node in the network of nodes to provide connectivity between each node in the network of nodes, as discussed herein.

In an example, a coverage associated with each node in the network of nodes can be determined by the wearable network topology analyzer 102 based on the received data. In an example, as the user walks around the site with the wearable network topology analyzer 102, data associated with the signal strength can be collected by the wearable network topology analyzer 102. As such, a determination can be made whether to perform an operation to adjust the coverage associated with the node in the network of nodes, based on the determined coverage.

In an example, the operation can include adjusting a position of the node placed in the determined position based on the determined coverage. Alternatively, and/or in addition, the operation can include removing a node in the network of nodes if multiple coverage is provided to an area. Alternatively, and/or in addition, the operation can include adding an additional node to the network of nodes to provide coverage for an area that does not have coverage.

In an example, the wearable network topology analyzer 102 can display an adjusted position of the node 108 to the user via augmented reality on the wearable network topology analyzer 102 to move the node 108 placed in the determined position. For instance, the icon 118 presented on the display 104 can be moved to the new position on the display 104, thus providing an indication where the position of the node 108 should be adjusted to. As such, the user can follow the icon 118 and adjust the position of the node 108 to the new position indicated by the icon 118.

In some embodiments, the wearable network topology analyzer 102 can receive voice commands from a user. The voice commands can be received by the microphone 116. In an example, the user can ask questions regarding data associated with the node 108. For instance, the user can ask questions regarding a quality of service associated with the node 108. In an example, the user can ask questions regarding a signal strength associated with the node. Questions can include, for example, "Do I get a particular data rate (e.g., 32 megabytes per second) here?" "Do all the nodes have redundant parents?" "How many nodes are available to me now?" "What is the location error estimate?"

In an example, determining whether all nodes have redundant parents can include determining whether all nodes are connected to more than one parent node. Determining how many nodes are available to the user can include determining how many nodes are within range. Determining the location error estimate can include determining an error estimate associated with a determined location of the wearable network topology analyzer 102. For instance, the location of the wearable network topology analyzer 102 can be determined by GPS, which be associated with an error.

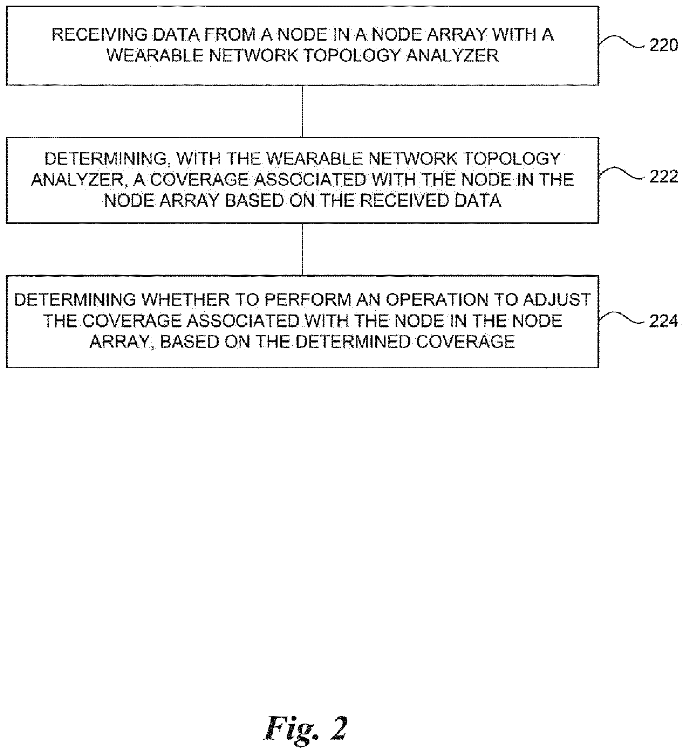

Figure 2 illustrates a method for analyzing a network topology according to one or more embodiments of the present disclosure. The method can include receiving data from a node in a network of nodes with a wearable network topology analyzer, at block 220. As discussed herein, data received from the node can include a bandwidth associated with the node, a signal quality associated with the node, a data rate associated with the node, a signal/noise ratio associated with the node, which can be presented to a user of the wearable network topology analyzer. For instance, the data rate, signal quality, and/or signal to noise ratio can be presented to the user of the wearable network topology analyzer via an associated display.

In some embodiments, the method can include determining, with the wearable network topology analyzer, a coverage associated with the node in the network of nodes based on the received data, at block 222. In an example, a user of the wearable network topology analyzer can walk around a site where the node in the network of nodes is installed. As such, the wearable network topology analyzer can receive the data from the node at various points in the site.

In an example, the data received from the node can be used to generate a radio frequency model associated with the node in the network of nodes. For instance, the radio frequency model can include data associated with a strength of a signal generated by the node in the network of nodes.

In some embodiments, the radio frequency model associated with the node in the network of nodes can be displayed on a display of the wearable network topology analyzer in relation to a map of a site associated with the node in the network of nodes. In an example, the radio frequency model can be displayed using a particular pattern on the wearable network topology analyzer. For instance, the particular pattern can be displayed on a display associated with the wearable network topology analyzer worn by the user. When the wearable network topology analyzer is worn by the user on the head, as the user moves their head, in different directions, the display can change to represent the particular radio frequency pattern that the user is looking towards.

In some embodiments, the generated map of the site associated with the node in the network of nodes can be generated with the wearable network topology analyzer. For instance, the map can be generated by the wearable network topology analyzer by taking pictures of the site associated with the node in the network of nodes to create a 2-D and/or 3-D map of the site. In an example, the pictures can be combined with a GPS location determined by a GPS antenna on the wearable network topology analyzer to create the 2-D and/or 3-D map of the site.

In some embodiments, the generated map of the site can include a position of nodes after they have been installed. In an example, the user of the wearable network topology analyzer can walk through the site upon installation of the nodes. Upon installation of the nodes can be defined as a point at which the nodes have been activated such that the nodes are producing a signal. As such, the wearable network topology analyzer can collect position data and signal strength data associated with the nodes. The wearable network topology analyzer and/or a remote server in communication with the wearable network topology analyzer can then learn a topology of the network of nodes based on the signal strength data associated with the nodes.

For instance, as the wearable network topology analyzer receives a signal strength from one of the nodes in the network of nodes, the signal strength can fluctuate based on how close and/or how far the wearable network topology analyzer is from the node. As such, based on the strength associated with a signal of a node that is received by the wearable network topology analyzer, the position of the node can be determined. The position of the node can then be correlated with the position of the wearable network topology analyzer and displayed on the generated map of the site. For instance, the position of the node can be triangulated based on the signal strength of the node signal received by the wearable network topology analyzer and the position data of the wearable network topology analyzer.

Alternatively, and/or in addition, as the user of the wearable network topology analyzer walks around the site associated with the network of nodes (e.g., the position of the wearable network topology analyzer in the site associated with the network of nodes changes), areas that are provided multiple coverage where multiple coverage may not be desired and/or areas that are provided no coverage and/or weak coverage (e.g., low signal strength) can be determined. As such, the wearable network topology analyzer can make a suggestion to the user (e.g., via a display of the wearable network topology analyzer) to move a particular node and/or place an additional node in an area that is not being provided a desired coverage.

In some embodiments, the method can include providing an augmented reality to the user of the wearable network topology analyzer that includes a coverage associated with the node in the network of nodes. In an example, the augmented reality can be provided to the user via a display on the wearable network topology analyzer. For instance, the display of the wearable network topology analyzer can be transparent so the user can see what is behind the display (e.g., the site where the node is to be installed), however, the coverage associated with the node can be projected on the display to provide a heads up display to the user. As such, when the user looks at the site, the coverage associated with the node, which can be presented in an augmented reality, can be displayed in a pattern on the display. When the user looks at the site through the display of the wearable network topology analyzer, the coverage associated with the node appears to be projected over the site. In addition, when the wearable network topology analyzer moves (e.g., the user moves their head), the pattern on the display can change to represent the coverage pattern where the user is looking.

In an example, by providing an augmented reality to the user of the wearable network topology analyzer that includes a coverage associated with the node in the network of nodes, the user can determine whether the node is operational. For instance, if the user looks at the node in the network of nodes and does not see the pattern associated with the coverage of the node being projected, the user can determine that the node is not operational.

Alternatively, and/or in addition, the wearable network topology analyzer can receive a list of nodes in the network of nodes. In an example, if the wearable network topology analyzer does not receive a signal from one of the nodes in the network of nodes, an indication that a node that is not providing the signal to the wearable network topology analyzer can be provided to the user. For instance, a visual indication can be provided to the user on the display and/or an audible indication can be provided to the user.

In some embodiments, a radio frequency model associated with the node can be generated before the node in the network of nodes is installed. For instance, the wearable network topology analyzer can store the position where the node is to be placed, which can be entered by the user and/or received from a map that specifies a position where the node is to be installed. Based on the position where the node is to be placed, a predicted radio frequency model can be generated.

In some embodiments, the predicted radio frequency model can account for obstructions in the generated map. For instance, obstructions can include walls, doorways, columns, etc. As such, a signal strength, and/or other signal characteristics can be affected by the obstructions. As such, the predicted radio frequency model can account for obstructions in the generated map, producing a model that shows how signal characteristics are affected by the obstructions. As such, when the user of the wearable network topology analyzer views the site where the node is to be installed, the user can view the predicted radio frequency model to see how the signal propagation associated with the node is affected with respect to any obstructions and can make any adjustments to the position where node is placed before they it is installed.

In some embodiments, the method can include, at block 224, determining whether to perform an operation to adjust the coverage associated with the node in the network of nodes, based on the determined coverage. In an example, the operation to adjust the coverage associated with the node in the network of nodes can include determining whether to place a second node in the network of nodes. For instance, if there is a gap in coverage, a second node can be placed in the network of nodes thus filling the gap with a signal produced by the second node.

The wearable network topology analyzer can determine where gaps in coverage exist from data collected from the signals associated with each node while the user moves around the site with the wearable network topology analyzer. In an example, the wearable network topology analyzer can point the user to where the second node should be placed with the icon displayed on the display.

In an example, determining whether to perform an operation to adjust the coverage associated with the node in the network of nodes can include determining whether to remove a third node in the network of nodes. For instance, multiple coverage (e.g., dual coverage) may be provided to an area in the site by the node, the second node, and/or the third node. However, multiple coverage may not be necessary and therefore, one of the nodes (e.g., third node) can be removed from the site such that the multiple coverage is reduced (e.g., to single coverage). The wearable network topology analyzer can determine which areas are provide multiple coverage from data collected from the signals associated with each node while the user moves around the site with the wearable network topology analyzer. In an example, the wearable network topology analyzer can point the user to the node that should be removed with the icon displayed on the display.

In an example, determining whether to perform the operation to adjust the coverage associated with the node in the network of nodes can include determining a position to move the node in the network of nodes. For instance, if multiple coverage is provided by the node and/or a gap in coverage exists, the wearable network topology analyzer can determine that a position of the node in the network of nodes should be adjusted to eliminate the gap in coverage and/or multiple coverage. In an example, the wearable network topology analyzer can point the user to the node whose position should be adjusted with the icon displayed on the display.

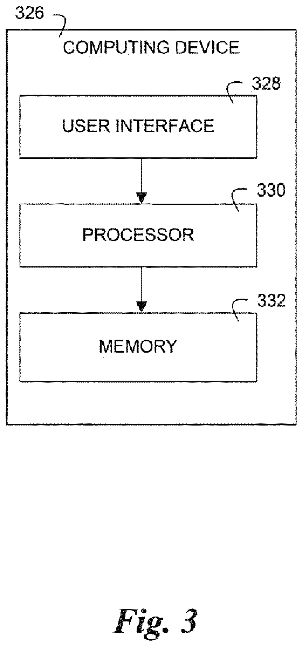

Figure 3 illustrates a computing device for analyzing a network topology according to one or more embodiments of the present disclosure. Computing device 326 can be used to perform the method as discussed in relation to Figure 2. As shown in Figure 3, computing device 326 includes a user interface 328. User interface 328 can be a graphic user interface (GUI) that can provide (e.g., display and/or present) and/or receive information (e.g., data and/or images) to and/or from a user (e.g., operator) of computing device 326. For example, user interface 328 can include a screen that can provide information to a user of computing device 326 and/or receive information entered into a display on the screen by the user. However, embodiments of the present disclosure are not limited to a particular type of user interface 328.

As shown in Figure 3, computing device 326 includes a processor 330 and a memory 332 coupled to the processor 330. Memory 332 can be any type of storage medium that can be accessed by the processor 330 to perform various examples of the present disclosure. For example, memory 332 can be a non-transitory computer readable medium having computer readable instructions (e.g., computer program instructions) stored thereon that are executable by the processor 330 to analyze a network topology according to one or more embodiments of the present disclosure.

Memory 332 can be volatile or nonvolatile memory. Memory 332 can also be removable (e.g., portable) memory, or non-removable (e.g., internal) memory. For example, memory 332 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disk read-only memory (CD-ROM)), flash memory, a laser disk, a digital versatile disk (DVD) or other optical disk storage, and/or a magnetic medium such as magnetic cassettes, tapes, or disks, among other types of memory.

Further, although memory 332 is illustrated as being located in computing device 326, embodiments of the present disclosure are not so limited. For example, memory 332 can also be located internal to another computing resource (e.g., enabling computer readable instructions to be downloaded over the Internet or another wired or wireless connection).

Processor 330 can execute the executable instructions stored in memory 332 in accordance with one or more embodiments of the present disclosure. For example, processor 330 can execute the executable instructions stored in memory 332 to determine a position to place a node on a map associated with a network of nodes. In an example, the position can be provided by a user and/or a map associated with a network of nodes, which indicates positions for installation of nodes. In an example, the position to place the node on the map associated with the network of nodes can be determined by a wearable network topology analyzer and/or can be determined by a remote server. For instance, the wearable network topology analyzer can communicate with the remote server and calculations can be performed on the remote server, in an example.

In some embodiments, the position to place the node on the map can be determined based on a determination of projected coverage between the node and a number of nodes in the network of nodes. For instance, the wearable network topology analyzer can determine a projected coverage between the node and the number of nodes in the network of nodes.

Alternatively, and/or in addition, the remote server can determine a projected coverage between the node and the number of nodes in the network of nodes. For instance, the site where the node is to be installed can include obstructions that may affect a propagation of a signal sent from the nodes, thus affecting coverage provided by the nodes. As discussed herein, the wearable network topology analyzer can account for these obstructions when determining the projected coverage between the node and the number of nodes in the network of nodes.

Processor 330 can execute the executable instructions stored in memory 332 to display the determined position to place the node to a user via augmented reality on a wearable network topology analyzer, as discussed herein. For instance, an icon can be displayed to the user via a display of the wearable network topology analyzer. As such, the icon can move to track the position where the node should be installed as the wearable network topology analyzer is moved. In an example, if the position is outside of a field of view of the wearable network topology analyzer, an arrow can be displayed to the user, indicating which way they should look to find the position where the node should be installed.

Processor 330 can execute the executable instructions stored in memory 332 to receive data from a node placed in the determined position with the wearable network topology analyzer. In an example, the wearable network topology analyzer can receive data from the node placed in the determined position as the user moves around the site in which the node is installed. For instance, data associated with a signal quality associated with the node, a data rate associated with the node, and/or a signal/noise ratio associated with the node can be received by the wearable network topology analyzer.

Processor 330 can execute the executable instructions stored in memory 332 to determine a coverage associated with the node placed in the determined position based on the received data. As data is collected from the node placed in the determined position, a coverage associated with the node can be determined, as discussed herein.

Processor 330 can execute the executable instructions stored in memory 332 to determine whether to perform an operation to adjust the coverage associated with the node placed in the determined position, based on the determined coverage. In an example, the operation can include adjusting a position of the node placed in the determined position. For instance, a position to move the node can be determined by the wearable network topology analyzer and the position to move the node placed in the determined position can be displayed to the user via augmented reality on the wearable network topology analyzer.

In some embodiments, a pattern associated with the signal produced by the node placed in the determined position can be displayed to the user via augmented reality on the wearable network topology analyzer. In an example, by displaying the signal produced by the node placed in the determined position, the user can view any gaps in coverage and perform remedial actions (e.g., adjust the coverage associated with a node).

In some embodiments, a position of the wearable network topology analyzer can be determined. In an example, the position can be determined based on a user input and/or a GPS antenna in communication with the wearable network topology analyzer. Based on the position of the wearable network topology analyzer, the map associated with the network of nodes can be generated. For instance, the wearable network topology analyzer can include a camera that can take images of the site where the node will be installed. In some embodiments, the wearable network topology analyzer may contain a range finder. Based on the images of the site, the position of the wearable network topology analyzer, and/or a distance determined by the range finder, the map associated with the network of nodes can be generated.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

## Claims

1. A method for analyzing a network topology, comprising:
receiving (220) data from a node (108) in a network of nodes with a wearable network topology analyzer (102);
determining (222), with the wearable network topology analyzer (102), a coverage associated with the node (108) in the network of nodes based on the received data;
displaying the coverage via augmented reality to a user on a display of the wearable network topology analyzer (102) while the user looks through the display at a site associated with the node (108) using the wearable network topology analyzer (102); and
determining (224) whether to perform an operation to adjust the coverage associated with the node (108) in the network of nodes, based on the determined coverage.

2. The method of claim 1, wherein determining whether to perform the operation to adjust the coverage associated with the node (108) in the network of nodes includes determining whether to place a second node (108) in the network of nodes.

3. The method of claim 1, wherein determining whether to perform an operation to adjust the coverage associated with the node (108) in the network of nodes includes determining whether to remove a third node (108) in the network of nodes.

4. The method of claim 1, wherein the method includes determining whether the node (108) in the network of nodes is operational.

5. The method of claim 1, wherein the method includes generating a map of a site associated with the node (108) in the network of nodes with the wearable network topology analyzer (102).

6. The method of claim 5, wherein the method includes:
generating a radio frequency model associated with the node (108) in the network of nodes; and
displaying, on a display (114) of the wearable network topology analyzer (102), the radio frequency model associated with the node (108) in the network of nodes in relation to the generated map.

7. The method of claim 5, wherein generating the map of the site associated with the node (108) in the network of nodes with the wearable network topology analyzer (102) includes determining a position (118) of the node (108) in the network of nodes upon installation of the node (108) based on signal strength data collected from the node (108) and a position (118) of the wearable network topology analyzer (102).

8. The method of claim 7, wherein the map of the site associated with the node (108) in the network of nodes is generated as the wearable network topology analyzer (102) is moved in the site associated with the node (108) in the network of nodes.

9. The method of claim 1, wherein determining whether to perform the operation to adjust the coverage associated with the node (108) in the network of nodes includes determining a position (118) to move the node (108) in the network of nodes.

## Patentansprüche

1. Verfahren zum Analysieren einer Netzwerktopologie, umfassend:
Empfangen (220) von Daten von einem Knoten (108) in einem Netzwerk von Knoten mit einem tragbaren Netzwerktopologie-Analysator (102);
Bestimmen (222), mit dem tragbaren Netzwerktopologie-Analysator (102), einer mit dem Knoten (108) in dem Netzwerk von Knoten assoziierten Abdeckung basierend auf den empfangenen Daten;
Anzeigen der Abdeckung über erweiterte Realität, einem Benutzer, auf einer Anzeige des tragbaren Netzwerktopologie-Analysators (102), während der Benutzer an einem Ort, der mit dem Knoten (108) assoziiert ist, durch die Anzeige schaut, unter Verwendung des tragbaren Netzwerktopologie-Analysators (102); und
Bestimmen (224), ob eine Operation durchzuführen ist, um die mit dem Knoten (108) in dem Netzwerk von Knoten assoziierte Abdeckung anzupassen, basierend auf der bestimmten Abdeckung.

2. Verfahren nach Anspruch 1, wobei Bestimmen, ob die Operation durchzuführen ist, um die mit dem Knoten (108) in dem Netzwerk von Knoten assoziierte Abdeckung anzupassen, enthält, zu bestimmen, ob ein zweiter Knoten (108) in das Netzwerk von Knoten zu platzieren ist.

3. Verfahren nach Anspruch 1, wobei Bestimmen, ob eine Operation durchzuführen ist, um die mit dem Knoten (108) in dem Netzwerk von Knoten assoziierte Abdeckung anzupassen, enthält, zu bestimmen, ob ein dritter Knoten (108) in dem Netzwerk von Knoten zu entfernen ist.

4. Verfahren nach Anspruch 1, wobei das Verfahren enthält, zu bestimmen, ob der Knoten (108) in dem Netzwerk von Knoten betriebsfähig ist.

5. Verfahren nach Anspruch 1, wobei das Verfahren enthält, eine Karte eines mit dem Knoten (108) in dem Netzwerk von Knoten assoziierten Orts mit dem tragbaren Netzwerktopologie-Analysator (102) zu erzeugen.

6. Verfahren nach Anspruch 5, wobei das Verfahren enthält:
Erzeugen eines mit dem Knoten (108) in dem Netzwerk von Knoten assoziierten Funkfrequenzmodells; und
Anzeigen, auf einer Anzeige (114) des tragbaren Netzwerktopologie-Analysators (102), des mit dem Knoten (108) in dem Netzwerk von Knoten assoziierten Funkfrequenzmodells in Beziehung zu der erzeugten Karte.

7. Verfahren nach Anspruch 5, wobei Erzeugen der Karte des mit dem Knoten (108) in dem Netzwerk von Knoten assoziierten Orts mit dem tragbaren Netzwerktopologie-Analysator (102) enthält, eine Position (118) des Knotens (108) in dem Netzwerk von Knoten nach Installation des Knotens (108) basierend auf Signalstärkedaten, erfasst von dem Knoten (108), und einer Position (118) des tragbaren Netzwerktopologie-Analysators (102) zu bestimmen.

8. Verfahren nach Anspruch 7, wobei die Karte des mit dem Knoten (108) in dem Netzwerk von Knoten assoziierten Orts erzeugt wird, während der tragbare Netzwerktopologie-Analysator (102) an dem mit dem Knoten (108) in dem Netzwerk von Knoten assoziierten Ort bewegt wird.

9. Verfahren nach Anspruch 1, wobei Bestimmen, ob die Operation zum Anpassen der mit dem Knoten (108) in dem Netzwerk von Knoten assoziierten Abdeckung durchzuführen ist, enthält, eine Position (118) zum Bewegen des Knotens (108) in dem Netzwerk von Knoten zu bestimmen.

## Revendications

1. Procédé d'analyse d'une topologie de réseau, comprenant :
la réception (220) de données provenant d'un noeud (108) dans un réseau de noeuds avec un analyseur de topologie de réseau (102) portable,
la détermination (222) avec l'analyseur de topologie de réseau (102) portable d'une couverture associée au noeud (108) dans le réseau de noeuds sur la base des données reçues,
l'affichage à un utilisateur de la couverture par l'intermédiaire de la réalité augmentée sur un afficheur de l'analyseur de topologie de réseau (102) portable lorsque l'utilisateur regarde un site associé au noeud (108) au travers de l'afficheur en utilisant l'analyseur de topologie de réseau (102) portable, et
la détermination (224) de ce qu'il faut effectuer une opération pour ajuster la couverture associée au noeud (108) dans le réseau de noeuds sur la base de la couverture déterminée.

2. Procédé selon la revendication 1, dans lequel la détermination de ce qu'il faut effectuer l'opération pour ajuster la couverture associée au noeud (108) dans le réseau de noeuds inclut la détermination de ce qu'il faut placer un deuxième noeud (108) dans le réseau de noeuds.

3. Procédé selon la revendication 1, dans lequel la détermination de ce qu'il faut effectuer une opération pour ajuster la couverture associée au noeud (108) dans le réseau de noeuds inclut la détermination de ce qu'il faut supprimer un troisième noeud (108) dans le réseau de noeuds.

4. Procédé selon la revendication 1, dans lequel le procédé inclut la détermination de ce que le noeud (108) dans le réseau de noeuds est opérationnel.

5. Procédé selon la revendication 1, dans lequel le procédé inclut la génération de la carte d'un site associé au noeud (108) dans le réseau de noeuds avec l'analyseur de topologie de réseau (102) portable.

6. Procédé selon la revendication 5, le procédé incluant :
la génération d'un modèle de radiofréquence associé au noeud (108) dans le réseau de noeuds, et
l'affichage sur un afficheur (114) de l'analyseur de topologie de réseau (102) portable du modèle de radiofréquence associé au noeud (108) dans le réseau de noeuds par rapport à la carte générée.

7. Procédé selon la revendication 5, dans lequel la génération de la carte de site associée au noeud (108) dans le réseau de noeuds avec l'analyseur de topologie de réseau (102) portable inclut la détermination de la position (118) du noeud (108) dans le réseau de noeuds lors de l'installation du noeud (108) sur la base de données d'intensité du signal recueillies à partir du noeud (108), ainsi que de la position (118) de l'analyseur de topologie de réseau (102) portable.

8. Procédé selon la revendication 7, dans lequel la carte du site associée au noeud (108) dans le réseau de noeuds est générée lorsque l'analyseur de topologie de réseau (102) portable est déplacé dans le site associé au noeud (108) dans le réseau de noeuds.

9. Procédé selon la revendication 1, dans lequel la détermination de ce qu'il faut effectuer l'opération pour ajuster la couverture associée au noeud (108) dans le réseau de noeuds inclut la détermination d'une position (118) pour déplacer le noeud (108) dans le réseau de noeuds.
